# EUROPEAN PATENT APPLICATION

(11) **EP 4 727 060 A1**
(43) Date of publication of application: **15.04.2026**
(21) Application number: 24205655.4
(22) Date of filing: 09.10.2024
(51) Int. Cl.: H04L 9/40, G06F 21/33, H04L 9/32

(54) **DIGITAL TOKEN CONFIGURED FOR USE IN A BUILDING MANAGEMENT SYSTEM AND METHODS FOR USING THE DIGITAL TOKEN**

(71) Applicant: dormakaba Schweiz AG, 8623 Wetzikon (CH)
(72) Inventor: GIERNICH, Stephan, 53179 Bonn (DE); ARISTE, Henri-Paul, 8153 Rümlang (CH); IBRAHIM, Patrick, 8153 Rümlang (CH)
(74) Representative: Balder IP Law, S.L.

(57) **Abstract**

According to a first aspect of the present invention, it may be provided a digital token configured for use in a building management system (BMS), the token being storable on a user device and being presentable by a user using the user device to at least one BMS device out of a plurality of BMS devices for enabling the user device to interact with the at least one BMS device in accordance with a granted permission level, wherein the token includes: a user ID being associated with the user and/or the user device; a permission level indicator indicating a granted permission level out of a set of available permission levels, wherein the set of available permission levels is stored on each of the plurality of BMS devices, preferably each of the BMS devices being produced such as to include the available permission levels and respectively associated permission level indicators predetermined in the firmware before installation and/or commissioning of the plurality of BMS devices; an allocation information indicating the at least one BMS device out of the plurality of BMS devices for which the granted permission level is valid; a digital signature of at least the user ID, the permission level indicator and the allocation information.

## Description

### Technical field

The present disclosure relates to interactive computer systems and methods for user interaction. Specifically, the present disclosure pertains to a method for touchless interaction among virtualized physical objects and virtual objects, in particular virtualized physical objects and purely virtual objects. Further, the present disclosure relates to a corresponding data processing apparatus and a computer program.

### Background

In the field of building management systems (BMS), it is common to employ various devices such as access control readers, sensors, and controllers to manage and monitor building operations. These devices often require different levels of user interaction for tasks such as configuration, maintenance, and data retrieval. Typically, user permissions are managed through centralized systems that assign and verify user credentials, which can be cumbersome and prone to security vulnerabilities. Known systems typically involve complex and fragmented permission management processes, where each BMS device may have its own set of permission levels and indicators, leading to inconsistencies and inefficiencies.

One prevalent approach involves the use of physical access cards or badges that store user credentials. These credentials are read by access control devices to grant or deny access based on predefined permission levels. However, this method has several limitations, including the risk of lost or stolen cards, the need for physical distribution of cards, and the difficulty in updating permissions dynamically. Additionally, the lack of a standardized permission level framework across different BMS devices often results in compatibility issues and increased administrative overhead.

Another approach involves the use of centralized databases that store user permissions and credentials. While this method allows for more dynamic updates and centralized control, it also introduces significant security risks. Centralized databases are attractive targets for cyber-attacks, and any breach can compromise the entire system. Furthermore, the reliance on constant connectivity to the central database can lead to operational disruptions in the event of network failures. Despite the substantial advances in the field of BMS, there remains a need for a more secure, efficient, and standardized method of managing user permissions across a diverse array of BMS devices.

Recent developments have introduced digital tokens as a means to enhance security and streamline permission management. Digital tokens can be stored on user devices such as smartphones and presented to BMS devices for authentication and authorization. However, existing digital token systems often lack a standardized framework for permission levels, leading to inconsistencies and limited interoperability between different BMS devices. Additionally, the process of issuing and verifying digital tokens can be complex and resource-intensive, further limiting their practical application in large-scale BMS deployments.

It is therefore a technical problem underlying the present invention to provide a method and system for managing user permissions in building management systems that at least partially overcomes the disadvantages of known systems.

### Summary of the invention

The problem is solved by the subject-matter defined in the independent claims. Advantageous modifications of embodiments of the invention are defined in the dependent claims as well as in the description and the figures.

According to a first aspect of the present invention, it may be provided a digital token configured for use in a building management system (BMS), the token being storable on a user device and being presentable by a user using the user device to at least one BMS device out of a plurality of BMS devices for enabling the user device to interact with the at least one BMS device in accordance with a granted permission level, wherein the token includes:
a user ID being associated with the user and/or the user device;
a permission level indicator indicating a granted permission level out of a set of available permission levels, wherein the set of available permission levels is stored on each of the plurality of BMS devices, preferably each of the BMS devices being produced such as to include the available permission levels and respectively associated permission level indicators predetermined in the firmware before installation and/or commissioning of the plurality of BMS devices;
an allocation information indicating the at least one BMS device out of the plurality of BMS devices for which the granted permission level is valid;
a digital signature of at least the user ID, the permission level indicator and the allocation information.

Throughout the present disclosure, the term "digital token" may refer to a digital data structure that can be stored on a user device and used to authenticate and authorize interactions with BMS devices. Specific examples of digital tokens may include JSON Web Tokens (JWT), XML tokens, or other cryptographic tokens.

Throughout the present disclosure, the term "building management system (BMS)" may include systems that control and monitor various building operations such as access control, HVAC, lighting, and security. Specific examples of BMS may include systems used in commercial buildings, residential complexes, and industrial facilities.

Throughout the present disclosure, the term "user device" may refer to any electronic device that can store and present the digital token. Specific examples of user devices may include smartphones, tablets, laptops, and dedicated access control devices.

Throughout the present disclosure, the term "BMS device" may include devices within the building management system that interact with the digital token to perform specific functions. Specific examples of BMS devices may include access control readers, HVAC controllers, lighting controllers, and security sensors.

Throughout the present disclosure, the term "user ID" may refer to a unique identifier associated with a user or a user device. Specific examples of user IDs may include email addresses, usernames, or unique alphanumeric strings.

Throughout the present disclosure, the term "permission level indicator" may refer to a data element within the digital token that specifies the level of access or permissions granted to the user. Specific examples of permission level indicators may include numeric codes, alphanumeric strings, or predefined labels such as "admin" or "user." It is preferred that the permission level indicators are numeric strings, preferably having less than three digits, such as 1-7.

Throughout the present disclosure, the term "allocation information" may refer to data within the digital token that specifies which BMS devices the granted permission level is applicable to. Specific examples of allocation information may include owner IDs, tenant IDs, device IDs, device addresses, or location-based identifiers. The term allocation information can be seen as synonymous with the term scope of application for which a respective permission level is applicable.

Throughout the present disclosure, the term "digital signature" may refer to a cryptographic signature that ensures the authenticity and integrity of the data within the digital token. Specific examples of digital signatures may include RSA signatures, DSA signatures, or ECDSA signatures.

The digital token being storable on a user device may provide the technical advantage of portability and ease of use, allowing users to carry their access credentials on personal devices, preferably offline.

The digital token being presentable by a user using the user device to at least one BMS device out of a plurality of BMS devices may provide the technical advantage of flexibility and interoperability, enabling users to interact with multiple BMS devices using a single token.

The token enabling the user device to interact with the at least one BMS device in accordance with a granted permission level may provide the technical advantage of enhances security and controlled access, ensuring that users can only perform actions they are authorized for.

The token including a user ID being associated with the user and/or the user device may provide the technical advantage of enhances security by allowing the system to identify and authenticate individual users and thereby link the permission levels to particular users.

The token including a permission level indicator indicating a granted permission level out of a set of available permission levels may provide the technical advantage of standardized permission management, ensuring consistency across different BMS devices. Further, this enhances the efficiency in producing the BMS devices because the permission level indicators and respectively allocated permission levels may be (hard) coded on the firmware of the BMS devices. The set of available permission levels being stored on each of the plurality of BMS devices may provide the technical advantage of decentralized permission verification, reducing the reliance on a central database and improving system resilience.

Each of the BMS devices being produced such as to include the available permission levels and respectively associated permission level indicators predetermined in the firmware before installation and/or commissioning of the plurality of BMS devices may provide the technical advantage of simplifying the deployment process and ensuring that all devices are compatible with the same permission framework.

The token including an allocation information indicating the at least one BMS device out of the plurality of BMS devices for which the granted permission level is valid may provide the technical advantage of fine-grained control over who can interact with which BMS device, allowing permissions to be tailored to specific devices.

The token including a digital signature of at least the user ID, the permission level indicator and the allocation information may provide the technical advantage of ensuring the authenticity and integrity of the token, preventing unauthorized modifications and ensuring secure interactions.

It may be provided that the set of available permission levels and respectively associated permission level indicators are stored in each of the plurality of BMS devices, preferably being access control readers, independently from a respective access-restricted area and/or asset and/or owner, wherein the set of available permission levels and respectively associated permission level indicators are identical across all of the plurality of BMS devices.

Throughout the present disclosure, the term "access-restricted area" may refer to any physical or virtual space that requires specific permissions for entry or interaction. Specific examples of access-restricted areas may include secure rooms.

Throughout the present disclosure, the term "asset" may include any valuable resource within the building management system that requires controlled access. Specific examples of assets may include physical equipment.

Throughout the present disclosure, the term "owner" may refer to an entity or individual who has control over an access-restricted area or asset. Specific examples of owners may include building managers, IT administrators, or property owners.

Throughout the present disclosure, the term "access control readers" may refer to devices that read and verify digital tokens to grant or deny access to access-restricted areas or assets. Specific examples of access control readers may include card readers, biometric scanners, or NFC-enabled devices.

The set of available permission levels and respectively associated permission level indicators being stored in each of the plurality of BMS devices independently from a respective access-restricted area and/or asset and/or owner may provide the technical advantage of simplifying the management of permissions, as changes in ownership or asset configuration do not require updates to the permission levels stored on each device.

The set of available permission levels and respectively associated permission level indicators being identical across all of the plurality of BMS devices may provide the technical advantage of ensuring consistency and interoperability, allowing users to interact with any BMS device using the same set of permissions.

Storing the set of available permission levels and respectively associated permission level indicators independently from a respective access-restricted area and/or asset and/or owner may provide the technical advantage of reducing production overhead, as permissions do not need to be set for each of the BMS devices separately. Rather, it becomes possible to produce the BMS devices as bulk ware. Further, having identical permission levels and indicators across all BMS devices, in particular access control readers, may provide the technical advantage of enhancing security, as it reduces the risk of misconfiguration or discrepancies between different readers.

The consistency of permission levels and indicators across all BMS devices may provide the technical advantage of simplifying user training and system maintenance, as there is a single, unified framework for managing permissions.

The independence of permission levels from specific access-restricted areas, assets, or owners may provide the technical advantage of greater flexibility in system design and deployment, as permissions can be managed centrally without needing to account for individual device configurations.

The identical permission levels and indicators across all BMS devices may provide the technical advantage of facilitating scalability, as new BMS devices can be added to the system without needing to reconfigure existing permissions.

The uniformity of permission levels and indicators may provide the technical advantage of improving user experience, as users can expect consistent behaviour from all BMS devices within the system.

It may be provided that the digital token comprises time information, wherein the time information includes a point in time at which the token or at least part of the token was created, and/or includes a time period for which the token or at least the digital signature is valid, and/or includes an expiration point in time at which the token or at least the digital signature becomes invalid.

Throughout the present disclosure, the term "time information" may refer to data elements within the digital token that specify temporal attributes related to the token's creation, validity, and expiration. Specific examples of time information may include timestamps, duration values, and expiration dates.

Throughout the present disclosure, the term "point in time" may refer to a specific moment when an event occurs. Specific examples of a point in time may include a timestamp indicating the exact date and time when the token was created.

Throughout the present disclosure, the term "time period" may refer to a duration during which an event or condition remains valid. Specific examples of a time period may include a validity duration of one hour, one day, or one year.

Throughout the present disclosure, the term "expiration point in time" may refer to a specific moment when an event or condition ceases to be valid. Specific examples of an expiration point in time may include a timestamp indicating the exact date and time when the token or digital signature becomes invalid.

The digital token comprising time information may provide the technical advantage of enhancing security by ensuring that tokens are only valid for a limited period, reducing the risk of misuse. The time information including a point in time at which the token or at least part of the token was created may provide the technical advantage of enabling traceability and auditing, allowing administrators to track when tokens were issued. The time information including a time period for which the token or at least the digital signature is valid may provide the technical advantage of enabling dynamic permission management, as tokens can be set to expire after a certain duration, requiring reauthorization. The time information including an expiration point in time at which the token or at least the digital signature becomes invalid may provide the technical advantage of preventing the use of outdated or compromised tokens, enhancing overall system security. Including time information in the digital token may provide the technical advantage of enabling time-based access control, where permissions can be granted or revoked based on specific time constraints.

The point in time at which the token or at least part of the token was created may provide the technical advantage of ensuring that tokens are issued in a timely manner, reducing the risk of unauthorized access due to delayed issuance. The time period for which the token or at least the digital signature is valid may provide the technical advantage of allowing temporary access permissions, which can be useful for contractors or temporary staff. The expiration point in time at which the token or at least the digital signature becomes invalid may provide the technical advantage of ensuring that tokens are regularly updated, maintaining the integrity and security of the system.

The inclusion of time information may provide the technical advantage of enabling automated token management, where tokens can be automatically renewed or revoked based on predefined time criteria. The time information may provide the technical advantage of enhancing compliance with security policies and regulations, as it allows for precise control over the validity and expiration of access credentials.

It may be provided that the digital token further includes a user certificate which includes a further user ID, the further user ID being issued and/or added to the token by the user device, preferably the user certificate being issued by a certificate chain of trust within the user device, wherein the user certificate is preferably not digitally signed, wherein the at least one BMS device receiving the token is enabled to verify validity of the user certificate based on the certificate chain of trust, and is enabled to verify the identity of the user based on the user ID and the further user ID.

Throughout the present disclosure, the term "user certificate" may refer to a digital document that includes information about the user and/or the user device and is used to verify the user's identity and/or the user device identity. Specific examples of user certificates may include X.509 certificates or other types of digital certificates.

Throughout the present disclosure, the term "further user ID" may refer to an additional unique identifier associated with the user and/or user device, distinctly created from the primary user ID. If the user and/or user device is identical to the user and/or user device for whom the permission level indicator was issued, the further user ID can be mapped and/or is identical to the user ID.

Throughout the present disclosure, the term "certificate chain of trust" may refer to a hierarchical structure of certificates that are used to establish trust in the validity of a user certificate. Specific examples of certificate chains of trust may include public key infrastructure (PKI) hierarchies or blockchain-based certificate chains.

Throughout the present disclosure, the term "not digitally signed" may refer to the absence of a digital signature on the user certificate. Specific examples may include plain text certificates, separately encrypted certificates, or certificates without cryptographic signatures.

The digital token further including a user certificate which includes a further user ID may provide the technical advantage of enhancing security by adding an additional layer of identity verification.

The further user ID being issued and/or added to the token by the user device may provide the technical advantage of ensuring that the user certificate is unique to each user and/or user device. It may be provided that the further user ID is created by a dedicated application running on the user device at runtime. It may be further provided that the further user ID is created based on an authentication of the user user the user device, e.g., by using a biometric input, such as face identification and/or fingerprint identification. The user certificate being issued by a certificate chain of trust within the user device may provide the technical advantage of establishing a secure and reliable method for verifying the validity of the user certificate. Verifying the validity of the user certificate may be performed by the respective BMS device.

The user certificate being not digitally signed may provide the technical advantage of simplifying the certificate issuance process while still maintaining a level of trust through the certificate chain of trust. The at least one BMS device receiving the token being enabled to verify the validity of the user certificate based on the certificate chain of trust may provide the technical advantage of ensuring that only valid and trusted certificates are accepted, enhancing overall system security.

The at least one BMS device receiving the token being enabled to verify the identity of the user based on the user ID and the further user ID may provide the technical advantage of ensuring accurate and reliable user authentication. Including a user certificate in the digital token may provide the technical advantage of enabling multi-factor authentication, where both the user ID and further user ID are required for verification.

The user certificate being issued by a certificate chain of trust within the user device may provide the technical advantage of leveraging existing trust infrastructures, such as PKI, to enhance security. The user certificate being not digitally signed may provide the technical advantage of reducing computational overhead and simplifying the verification process, while still maintaining a level of trust through the certificate chain of trust.

The ability of the BMS device to verify the validity of the user certificate and the identity of the user may provide the technical advantage of ensuring that only authorized users can interact with the BMS devices, enhancing overall system security and integrity.

It may be provided that the digital signature is obtained by encrypting a hash value using a private key, wherein the hash value is obtained by applying a hash function to the digitally signed data, at least including the user ID, the permission level indicator and the allocation information.

Throughout the present disclosure, the term "hash value" may refer to a fixed-size string of characters generated by applying a hash function to data. Specific examples of hash values may include SHA-256 hashes, MD5 hashes, or SHA-3 hashes.

Throughout the present disclosure, the term "private key" may refer to a cryptographic key that is used in asymmetric encryption algorithms to encrypt data. Specific examples of private keys may include RSA private keys, DSA private keys, or ECC private keys.

Throughout the present disclosure, the term "hash function" may refer to a mathematical function that converts an input into a fixed-size string of characters, which appears random. Specific examples of hash functions may include SHA-256, MD5, or SHA-3.

The digital signature being obtained by encrypting a hash value using a private key may provide the technical advantage of ensuring that the digital signature is unique and can only be generated by the entity that possesses the private key. The hash value being obtained by applying a hash function to the digitally signed data, at least including the user ID, the permission level indicator and the allocation information may provide the technical advantage of ensuring the integrity of the data, as any changes to the data would result in a different hash value. Encrypting the hash value using a private key may provide the technical advantage of enabling verification of the digital signature using the corresponding public key, ensuring that the data has not been tampered with and is authentic.

Applying a hash function to the digitally signed data may provide the technical advantage of reducing the amount of data that needs to be encrypted, making the process more efficient.

Including the user ID, the permission level indicator and the allocation information in the digitally signed data may provide the technical advantage of ensuring that these critical pieces of information are protected and can be verified for authenticity and integrity.

The use of a private key for encrypting the hash value may provide the technical advantage of enhancing security, as the private key is kept secret and only the corresponding public key is shared. The hash value providing a fixed-size string of characters may provide the technical advantage of making the digital signature process consistent and predictable, regardless of the size of the input data. The use of a hash function may provide the technical advantage of ensuring that even small changes to the input data result in significantly different hash values, making it easy to detect tampering. The digital signature ensuring the authenticity and integrity of the data may provide the technical advantage of preventing unauthorized modifications and ensuring that the data can be trusted. The ability to verify the digital signature using a public key may provide the technical advantage of enabling decentralized verification, where any entity with the public key can verify the authenticity of the data without needing access to the private key.

It may be provided that the token includes a hash function that can be applied to the digitally signed data, at least including the user ID, the permission level indicator and the allocation information.

Throughout the present disclosure, the term "digitally signed data" may refer to the data within the digital token that has been signed with a digital signature to ensure its authenticity and integrity. Specific examples of digitally signed data may include user ID, permission level indicator, and allocation information.

The token including a hash function that can be applied to the digitally signed data may provide the technical advantage of enabling the generation of a hash value, which can be used to create a digital signature or verify the integrity of the data. The digitally signed data at least including the user ID, the permission level indicator and the allocation information may provide the technical advantage of ensuring that these critical pieces of information are protected and can be verified for authenticity and integrity. Including a hash function in the token may provide the technical advantage of enabling on-device verification of data integrity, reducing the need for external verification services. The use of a hash function may provide the technical advantage of making the digital signature process more efficient, as it reduces the amount of data that needs to be encrypted and verified.

It may be provided that the digital token of any one of the preceding claims, wherein the token includes a public key configured to verify validity of the digital signature for the digitally signed data, preferably configured to decrypt the digital signature.

Throughout the present disclosure, the term "verify validity" may refer to the process of confirming that a digital signature is authentic and that the data has not been tampered with. Specific examples of verifying validity may include checking the digital signature against the public key and ensuring that the hash values match.

Throughout the present disclosure, the term "decrypt" may refer to the process of converting encrypted data back into its original form using a cryptographic key. Specific examples of decrypting may include using a public key to decrypt a digital signature and retrieve the original hash value.

The token including a public key configured to verify validity of the digital signature for the digitally signed data may provide the technical advantage of enabling decentralized verification, where any entity with the public key can verify the authenticity of the data without needing access to the private key. The public key being preferably configured to decrypt the digital signature may provide the technical advantage of allowing the retrieval of the original hash value, which can be compared to a newly computed hash value to verify data integrity.

The inclusion of a public key in the token may provide the technical advantage of enabling scalable and flexible verification processes, as any entity with the public key can perform the verification without needing access to the private key.

It may be provided that the public key is included in a public certificate issued and signed by a certificate chain being stored on each of the plurality of BMS devices, preferably within the firmware of each of the plurality of BMS devices, more preferably within a secure element of each of the plurality of BMS devices.

Throughout the present disclosure, the term "public certificate" may refer to a digital document that includes a public key and is used to verify the authenticity of the public key. Specific examples of public certificates may include X.509 certificates or other types of digital certificates.

Throughout the present disclosure, the term "certificate chain" may refer to a hierarchical structure of certificates that are used to establish trust in the validity of a public certificate. Specific examples of certificate chains may include public key infrastructure (PKI) hierarchies or blockchain-based certificate chains.

Throughout the present disclosure, the term "secure element" may refer to a dedicated hardware component designed to provide secure storage and processing of sensitive data. Specific examples of secure elements may include Trusted

Platform Modules (TPMs), Secure Enclaves, or Hardware Security Modules (HSMs).

The public key being included in a public certificate issued and signed by a certificate chain being stored on each of the plurality of BMS devices may provide the technical advantage of ensuring that the public key is trusted and can be verified using the certificate chain.

It may be provided that the set of available permission levels includes at least two of the following permission levels:
(i) owner, including the permission to perform configuration and read-data operations on the at least one BMS device, including adding and removing users from a permission whitelist and/or from a permission blacklist;
(ii) full access, including the permission to perform configuration and read-data operations on the at least one BMS device, excluding adding and removing users from a permission whitelist and/or from a permission blacklist;
(iii) access control administrator, including the permission to set, delete and add access control configurations on the basis of which the at least one BMS device being an access control device controls access to at least one access-restricted area or asset;
(iv) access control operator, including the permission to set, delete and add access control credentials on the basis of which the at least one BMS device being an access control device controls access to at least one access-restricted area or asset;
(v) installer-read access, including the permission to read at least part of a data stored on the at least one BMS device, preferably data related to installation operations;
(vi) installer, including the permission to perform maintenance actions on the at least one BMS device, at least except performing a factory reset;
(vii) installer-full access, including the permission to setup, maintain and factory-reset the at least one BMS device, preferably wherein the installer-full access automatically expires upon completion of an installation of the at least one BMS device;
(viii) analytics, including the permission to read at least part of a data stored on the at least one BMS device, preferably the data being related to a status of the at least one BMS device.

Throughout the present disclosure, the term "owner" may refer to a permission level that includes the ability to perform configuration and read-data operations on a BMS device, including adding and removing users from a permission whitelist and/or blacklist. Specific examples of owner permissions may include setting device configurations, reading device data, and managing user access lists.

Throughout the present disclosure, the term "full access" may refer to a permission level that includes the ability to perform configuration and read-data operations on a BMS device, excluding adding and removing users from a permission whitelist and/or blacklist. Specific examples of full access permissions may include configuring device settings and reading operational data.

Throughout the present disclosure, the term "access control administrator" may refer to a permission level that includes the ability to set, delete, and add access control configurations on a BMS device that controls access to an access-restricted area or asset. Specific examples of access control administrator permissions may include managing access rules and policies.

Throughout the present disclosure, the term "access control operator" may refer to a permission level that includes the ability to set, delete, and add access control credentials on a BMS device that controls access to an access-restricted area or asset. Specific examples of access control operator permissions may include issuing and revoking access credentials.

Throughout the present disclosure, the term "installer-read access" may refer to a permission level that includes the ability to read at least part of the data stored on a BMS device, preferably data related to installation operations. Specific examples of installer-read access permissions may include viewing installation logs and configuration settings.

Throughout the present disclosure, the term "installer" may refer to a permission level that includes the ability to perform maintenance actions on a BMS device, at least except performing a factory reset. Specific examples of installer permissions may include updating firmware and performing routine maintenance tasks.

Throughout the present disclosure, the term "installer-full access" may refer to a permission level that includes the ability to setup, maintain, and factory-reset a BMS device, preferably with the installer-full access automatically expiring upon completion of an installation. Specific examples of installer-full access permissions may include initial device setup and comprehensive maintenance.

Throughout the present disclosure, the term "analytics" may refer to a permission level that includes the ability to read at least part of the data stored on a BMS device, preferably data related to the status of the device. Specific examples of analytics permissions may include accessing performance metrics and operational statistics.

The set of available permission levels including at least two of the specified permission levels may provide the technical advantage of offering a flexible and comprehensive framework for managing user access and permissions in a BMS.

According to a second aspect of the present invention, it may be provided a BMS device, preferably being an access control reader, the BMS device being configured to receive and process a token according to the first aspect of the present invention, wherein the BMS device is configured to:
change a mapping between one or more available permission levels out of the set of available permission levels and respectively associated permission level indicators,
wherein the change of the mapping is triggered and/or performed:
   - by a firmware update; and/or
   - by a reconfiguration instruction received from an authorized source; and/or
   - automatically after occurrence of a trigger event, wherein the trigger event preferably includes completion of a commissioning process.

Throughout the present disclosure, the term "mapping" may refer to the association between permission levels and their respective indicators within a BMS device. Specific examples of mapping may include tables or databases that link permission levels to specific actions or access rights.

Throughout the present disclosure, the term "reconfiguration instruction" may refer to a command or set of commands received by a BMS device to change its configuration settings. Specific examples of reconfiguration instructions may include network configuration changes, permission level adjustments, or operational mode changes.

Throughout the present disclosure, the term "commissioning process" may refer to the initial setup and configuration of a BMS device to ensure it operates correctly within the system. Specific examples of commissioning processes may include device calibration, network integration, and security configuration.

The ability to change the mapping between permission levels and their respective indicators may provide the technical advantage of enhancing the flexibility and scalability of the BMS system, as permission levels can be adjusted as needed.

The ability to receive reconfiguration instructions from an authorized source may provide the technical advantage of enabling secure and controlled updates to the BMS device's configuration.

According to a third aspect of the present invention, it may be provided a computer-implemented building management system (BMS) method, the method comprising:
- generating, by a cloud platform, a token according to the first aspect of the present invention.

It may be provided that the computer-implemented building management system (BMS) method comprises:
- establishing a secure communication channel, preferably an encrypted communication channel, between the cloud platform and the user device;
- transmitting a token according to the first aspect of the present invention from the cloud platform to the user device.

Throughout the present disclosure, the term "secure communication channel" may refer to a communication pathway that ensures the confidentiality, integrity, and authenticity of the data transmitted between two entities. Specific examples of secure communication channels may include TLS (Transport Layer Security) and VPN (Virtual Private Network) connections.

Throughout the present disclosure, the term "encrypted communication channel" may refer to a communication pathway where the data transmitted is encrypted to prevent unauthorized access. Specific examples of encrypted communication channels may include HTTPS (Hypertext Transfer Protocol Secure) and SSH (Secure Shell) connections.

According to a fourth aspect of the present invention, it may be provided a computer-implemented building management system (BMS) method, the method being performed by at least one BMS device, preferably being an access control device, the method comprising:
- receiving a token according to the first aspect of the present invention by the at least one BMS device.

The method may provide the technical advantage of reducing the need for physical access credentials, such as cards or badges, as digital tokens can be used instead.

According to a fifth aspect of the present invention, it may be provided an access control system, comprising:
- at least one access control reader configured to control access to at least one access-restricted area or asset, the at least one access control reader having a processing unit, a memory unit and a firmware installed thereon, wherein the at least one access control reader is configured to perform a method according to the third aspect of the present invention.

All features, technical implementation details and advantages described with respect to any one of the aspects of the present invention described herein are self-evidently mutatis mutandis applicable for any one of the other aspects of the present invention and vice versa.

### Brief summary of the figures

The disclosure may be better understood by reference to the following drawings:
- Figure 1:: A fist component diagram of a digital token in accordance with embodiments of the present disclosure.
- Figure 2:: A third component diagram of a digital token in accordance with embodiments of the present disclosure.
- Figure 3:: A third component diagram of a digital token in accordance with embodiments of the present disclosure.

### Detailed description of the figures

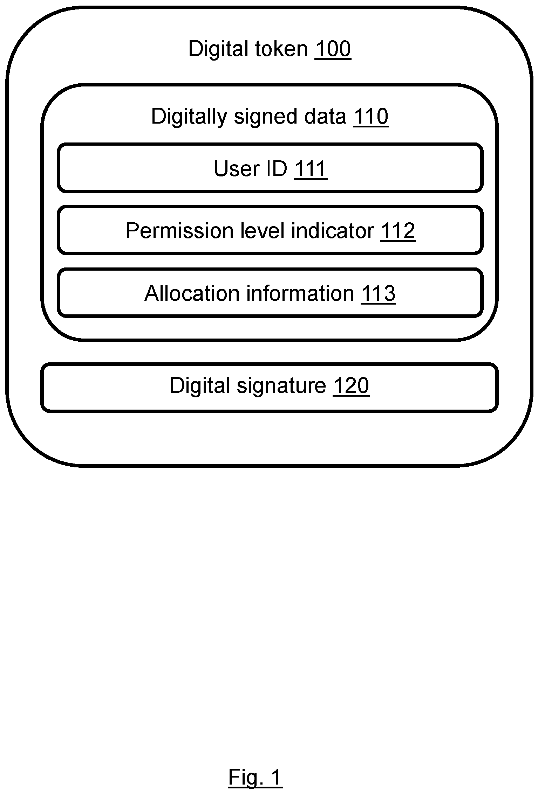

Figure 1 depicts a first component diagram of a digital token 100 in accordance with embodiments of the present disclosure. The digital token 100 may be configured for use in a building management system (BMS). The token 100 may be stored a user device, such as a smartphone of a service technician or an end user. At runtime, it may be presented by the user using the user device to at least one BMS device out of a plurality of BMS devices for enabling the user device to interact with the at least one BMS device in accordance with a respectively granted permission level. BMS devices may be for example access controllers of access control readers. Thus, they may be relevant of the building security. Therefore, the requirement for the permission is that the right user who is allowed gets the respective permission. Further, the level of permission must be accurate. Therefore, authenticity and integrity of the token 100 is important. Further, the identity of the user is important. On the other hand, the token 100 should be easy to issue and applicable widely for BMS devices that may be produced as bulk ware, i.e., having the same firmware from scratch without the need for individual configuration before installation and/or commissioning. The digital token 100 of the present invention fulfils these strict requirements.

It includes, at least, as depicted in figure 1, a user ID 111 being associated with the user and/or the user device; a permission level indicator 112 indicating a granted permission level out of a set of available permission levels, wherein the set of available permission levels is stored on each of the plurality of BMS devices, preferably each of the BMS devices being produced such as to include the available permission levels and respectively associated permission level indicators 112 predetermined in the firmware before installation and/or commissioning of the plurality of BMS devices; an allocation information 113 indicating the at least one BMS device out of the plurality of BMS devices for which the granted permission level is valid; and a digital signature 120 of at least the user ID 111, the permission level indicator 112 and the allocation information 113.

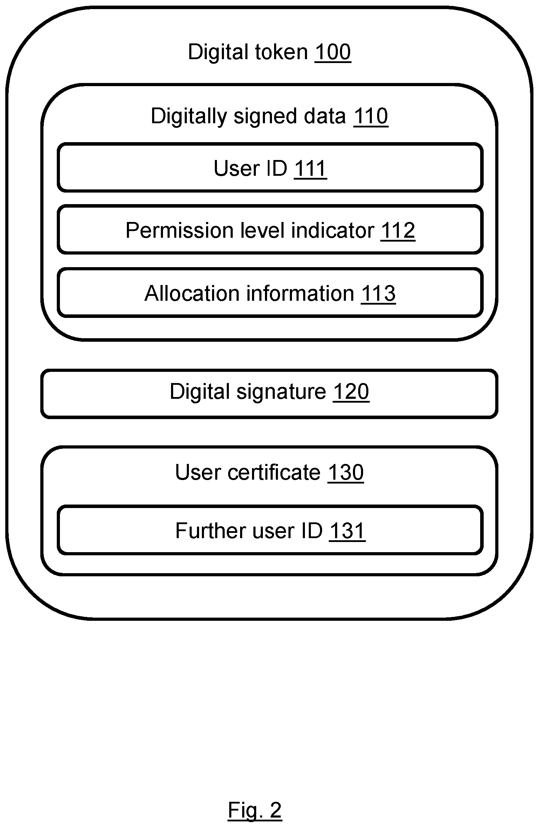

In figure 2, the digital token 100 further includes a user certificate 130 including a further user ID 131 to be checked if it is identical to the user ID 111. By this, the identity of the user is verified in an easy manner.

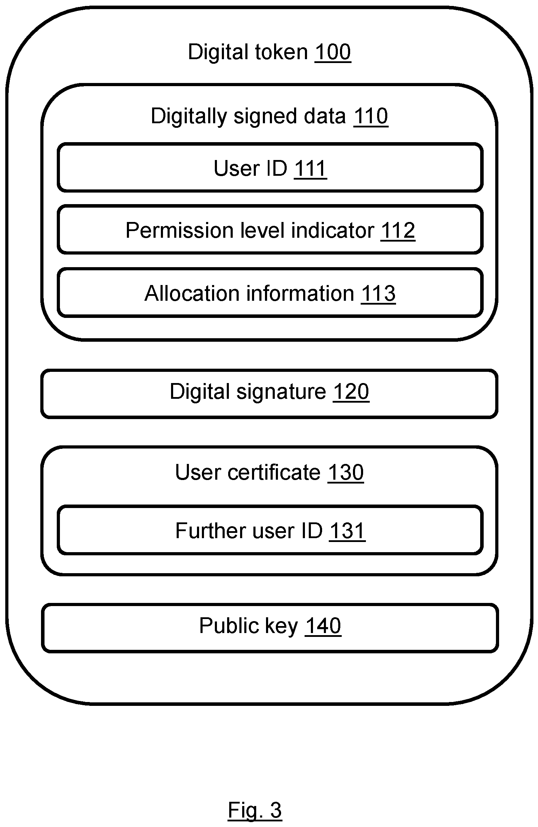

In figure 3, the digital token 100 further includes the public key 140 such that the public key 140 must not necessarily be part of the firmware stored on the BMS devices, but can be easily exchanged without changing the firmware on each BMS device.

The process, at runtime, may be as follows:
A user may trigger a cloud system to issue a digital token 100 for respective BMS devices. The token 100 may be sent to the user device. The user device may comprise a dedicated application in which the user can authenticate, e.g. by biometric sensors of the user device or by any kind of security key. The user device may store the token 100 securely such that only the user, via verification, can trigger presenting the token 100 to any BMS device. This may be one way to ensure the user's identity. Alternatively or additionally, the user certificate 130 may be issued by the user device upon authentication of the user by means of biometrics and/or the like.

If the user device as a carrier of the token 100 is presented to a BMS device, a secure communication channel may be established. The secure communication channel may, e.g., comprise Bluetooth Low Energy communication, or Ultra Wideband communication, and/or the like. The token 100 may be sent to the BMS device.

Based on the public key 140, the BMS device may decrypt the digital signature 120. Based on a hash function that may be sent together with or as part of the digitally signed data 110, or that may be stored on the BMS device previously, a hash value may be obtained by processing the digitally signed data 110 with the hash function. The hash value may be compared to the value obtained by decrypting the digital signature 120. If the values match, the authenticity and integrity of the digitally signed data 110 is ensured.

The allocation information 113 may be extracted by the BMS device in order to check if the token 100 is applicable or not. For example, the allocation information 113 may include that the token 100 is applicable to BMS devices A, B and C. If one of those BMS devices extracts the allocation information 113, the token 100 is considered applicable. If a different BMS device extracts the allocation information 113, the token 100 is considered not applicable and thus permission is denied.

If the token's 100 applicability was checked and verified, the BMS device may check, based on the permission level indicator 112, the level of permission. For this, the BMS device may perform a lookup in a table stored on the BMS device. The table may have a mapping between various permission level indicators 112 and actual permission levels that are available.

For example, an owner may have the permission level indicator 112. The BMS device may extract the permission level indicator 112 and perform a lookup in order to know that the owner permission level should be granted.

The BMS device may further check the identity of the user and/or user device, based on the user ID 111 and the user certificate 130 comprising the further user ID 131. For this purpose, the BMS device may compare said user ID 111 and further user ID 131 and if they are identical, the BMS device considers that the token 100 was issued for exactly this user having said user ID 111. Authenticity and Integrity of the user certificate 130 may be achieved via a certificate chain of trust that may be available on the user device and the BMS device.

It may be provided that the set of available permission levels includes at least two of the following permission levels:
(i) owner, including the permission to perform configuration and read-data operations on the at least one BMS device, including adding and removing users from a permission whitelist and/or from a permission blacklist;
(ii) full access, including the permission to perform configuration and read-data operations on the at least one BMS device, excluding adding and removing users from a permission whitelist and/or from a permission blacklist;
(iii) access control administrator, including the permission to set, delete and add access control configurations on the basis of which the at least one BMS device being an access control device controls access to at least one access-restricted area or asset;
(iv) access control operator, including the permission to set, delete and add access control credentials on the basis of which the at least one BMS device being an access control device controls access to at least one access-restricted area or asset;
(v) installer-read access, including the permission to read at least part of a data stored on the at least one BMS device, preferably data related to installation operations;
(vi) installer, including the permission to perform maintenance actions on the at least one BMS device, at least except performing a factory reset;
(vii) installer-full access, including the permission to setup, maintain and factory-reset the at least one BMS device, preferably wherein the installer-full access automatically expires upon completion of an installation of the at least one BMS device;
(viii) analytics, including the permission to read at least part of a data stored on the at least one BMS device, preferably the data being related to a status of the at least one BMS device.

Each of these permission levels may be associated with one permission level indicator 112. The permission level indicators 112 may be universal to all BMS devices.

## Claims

1. A digital token (100) configured for use in a building management system (BMS), the token being storable on a user device and being presentable by a user using the user device to at least one BMS device out of a plurality of BMS devices for enabling the user device to interact with the at least one BMS device in accordance with a granted permission level, wherein the token includes:
a user ID (111) being associated with the user and/or the user device;
a permission level indicator (112) indicating a granted permission level out of a set of available permission levels, wherein the set of available permission levels is stored on each of the plurality of BMS devices, preferably each of the BMS devices being produced such as to include the available permission levels and respectively associated permission level indicators (112) predetermined in the firmware before installation and/or commissioning of the plurality of BMS devices;
an allocation information (113) indicating the at least one BMS device out of the plurality of BMS devices for which the granted permission level is valid;
a digital signature (120) of at least the user ID (111), the permission level indicator (112) and the allocation information (113).

2. The digital token according to claim 1, wherein the set of available permission levels and respectively associated permission level indicators (112) are stored in each of the plurality of BMS devices independently from a respective access-restricted area and/or asset and/or owner, wherein the set of available permission levels and respectively associated permission level indicators (112) are identical across all of the plurality of BMS devices, the BMS devices preferably being access control readers.

3. The digital token (100) of any one of the preceding claims, comprising time information, wherein the time information includes a point in time at which the token (100) or at least part of the token (100) was created, and/or includes a time period for which the token (100) or at least the digital signature (120) is valid, and/or includes an expiration point in time at which the token (100) or at least the digital signature (120) becomes invalid.

4. The digital token (100) of any one of the preceding claims, wherein the digital token (100) further includes a user certificate (130) which includes a further user ID (131), the further user ID (131) being issued and/or added to the token (100) by the user device, preferably the user certificate (130) being issued by a certificate chain of trust within the user device, wherein the user certificate (130) is preferably not digitally signed, wherein the at least one BMS device receiving the token (100) is enabled to verify validity of the user certificate (130) based on the certificate chain of trust, and is enabled to verify the identity of the user based on the user ID (111) and the further user ID (131).

5. The digital token (100) of any one of the preceding claims, wherein the digital signature (120) is obtained by encrypting a hash value using a private key, wherein the hash value is obtained by applying a hash function to the digitally signed data (110), at least including the user ID (111), the permission level indicator (112) and the allocation information (113).

6. The digital token (100) of any one of the preceding claims, wherein the token includes a hash function that can be applied to the digitally signed data (110), at least including the user ID (111), the permission level indicator (112) and the allocation information (113).

7. The digital token (100) of any one of the preceding claims, wherein the token includes a public key (140) configured to verify validity of the digital signature (120) for the digitally signed data (110), preferably configured to decrypt the digital signature (120).

8. The digital token (100) of claim 7, wherein the public key (140) is included in a in a public certificate issued and signed by a certificate chain being stored on each of the plurality of BMS devices, preferably within the firmware of each of the plurality of BMS devices, more preferably within a secure element of each of the plurality of BMS devices.

9. The digital token (100) of any one of the preceding claims, wherein the set of available permission levels includes at least two of the following permission levels:
(i) owner, including the permission to perform configuration and read-data operations on the at least one BMS device, including adding and removing users from a permission whitelist and/or from a permission blacklist;
(ii) full access, including the permission to perform configuration and read-data operations on the at least one BMS device, excluding adding and removing users from a permission whitelist and/or from a permission blacklist;
(iii) access control administrator, including the permission to set, delete and add access control configurations on the basis of which the at least one BMS device being an access control device controls access to at least one access-restricted area or asset;
(iv) access control operator, including the permission to set, delete and add access control credentials on the basis of which the at least one BMS device being an access control device controls access to at least one access-restricted area or asset;
(v) installer-read access, including the permission to read at least part of a data stored on the at least one BMS device, preferably data related to installation operations;
(vi) installer, including the permission to perform maintenance actions on the at least one BMS device, at least except performing a factory reset;
(vii) installer-full access, including the permission to setup, maintain and factory-reset the at least one BMS device, preferably wherein the installer-full access automatically expires upon completion of an installation of the at least one BMS device;
(viii) analytics, including the permission to read at least part of a data stored on the at least one BMD device, preferably the data being related to a status of the at least one BMS device.

10. A BMS device, preferably being an access control reader, the BMS device being configured to receive and process a token according to any one of claims 1-9, wherein the BMS device is configured to:
change a mapping between one or more available permission levels out of the set of available permission levels and respectively associated permission level indicators (112), wherein the change of the mapping is triggered and/or performed:
by a firmware update; and/or
by a reconfiguration instruction received from an authorized source; and/or
automatically after occurrence of a trigger event, wherein the trigger event preferably includes completion of a commissioning process.

11. A computer-implemented building management system (BMS) method, the method comprising:
generating, by a cloud platform, a token according to any one of claims 1-9.

12. The computer-implemented building management system (BMS) method of claim 11, the method comprising:
establishing a secure communication channel, preferably an encrypted communication channel, between the cloud platform and the user device;
transmitting a token according to any one of claims 1-9 from the cloud platform to the user device.

13. A computer-implemented building management system (BMS) method, the method being performed by at least one BMS device, preferably being an access control device, the method comprising:
receiving a token according to any one of claims 1-9 by the at least one BMS device.

14. The computer-implemented building management system (BMS) method of claim 13, the token (100) being a token according to claim 4, the method further comprising:
verifying validity of the user certificate (130) based on the certificate chain of trust stored on the at least one BMS device;
verifying the digital signature (120) of the token (100) using a public key (140) which may be included in a public certificate and using a hash function;
verifying the identity of the user based on the user ID (111) and the further user ID (131);
granting the user device to interact with the BMS device in accordance with the permission level indicator (112) and allocation information (113).

15. An access control system, comprising:
at least one access control reader configured to control access to at least one access-restricted area or asset, the at least one access control reader having a processing unit, a memory unit and a firmware installed thereon, wherein the at least one access control reader is configured to perform a method according to claim 12.
